# EUROPEAN PATENT SPECIFICATION

(11) **EP 2 591 903 B1**
(45) Date of publication and mention of the grant of the patent: **02.11.2016**
(21) Application number: 11803625.0
(22) Date of filing: 06.07.2011
(51) Int. Cl.: B29C 47/08, C08K 3/24, C08K 5/098, C08L 101/00

(54) **PURGING AGENT AND PURGING METHOD USING SAME**
Reinigungsmittel und Reinigungsverfahren unter dessen Verwendung
AGENT POUR PURGE ET PROCÉDÉ DE PURGE L'UTILISANT

(30) Priority: 08.07.2010 JP 2010155738
(43) Date of publication of application: 15.05.2013
(73) Proprietor: The Nippon Synthetic Chemical Industry Co., Ltd., Osaka 530-0018 (JP)
(72) Inventor: KATO Kenji, Osaka-shi, Osaka 530-0018 (JP); ONISHI Hideshi, Osaka-shi, Osaka 530-0018 (JP)
(74) Representative: Kuhnen & Wacker
(86) International application number: PCT/JP2011/065480
(87) International publication number: WO 2012/005291

(56) References cited:
- EP-A1- 1 075 370
- EP-A2- 0 234 529
- JP-A- 5 279 518
- JP-A- 6 134 770
- JP-A- H0 491 149
- JP-A- H0 497 805
- JP-A- 10 000 672
- JP-A- 10 016 024
- JP-A- 10 067 040
- JP-A- H05 124 046
- JP-A- H05 131 520
- JP-A- 2000 167 852
- JP-A- 2000 263 265
- JP-A- 2002 513 688
- JP-A- 2005 220 209
- JP-A- 2007 021 765
- US-A- 4 838 948
- US-A- 5 238 608

## Description

### Technical Field

The present invention relates to a purging agent used in an apparatus for melt molding a thermoplastic resin, and particularly relates to a purging agent suitable for a saponified ethylene-vinyl ester copolymer resin and a purging method using the same.

### Background Art

Conventionally, thermoplastic resins having high polarity, such as a saponified ethylene-vinyl ester copolymer resin (hereinafter referred to as "EVOH resin"), a polyvinyl alcohol resin (hereinafter referred to as "PVA resin") and a polyamide resin (hereinafter referred to as "PA resin") have excellent gas barrier properties, and therefore are generally used by molding the resins into wrapping films or containers for foods by a melt molding method.

However, in the case of melt-molding the thermoplastic resin over a long period of time, there were the problems that a part of the thermoplastic resin remains for a long period of time in a resin flow passage of a melt molding machine such as an extruder, and gelation, thermal degradation, decomposition and the like occur, thereby streaks occur in a product, or the gel is mixed into a product, which causes defective product.

Therefore, in the case that occurrence of streaks and mixing of gel are observed in a product, or that production work is stopped and the production is then restarted, it is effective to clean and remove a thermoplastic resin present in a resin flow passage and caked thereon, using a purging agent.

Conventionally, the technology of using a purging agent comprising a polyolefin polymer containing a salt of a Group II metal of a periodic table in an amount of from 0.05 to 1 wt% in terms of the metal and having a specific melt index, as the purging agent has been known (for example, see Patent Document 1).

The technology is that discharge of the purging agent itself from an extruder is completed in a short period of time by increasing fluidity of a purging agent by using the purging agent comprising a polyolefin resin containing specific small amount of a metal salt, and loss of defective products due to residual purging agent is greatly remedied in performing re-extrusion molding when supplying again a highly polar thermoplastic resin.

However, Patent Document 1 describes that in the technology, "it is important that the content of the metal salt is from 0.05 to 1 wt% based on the polyolefin polymer, and where the content does not fall within the range, the object of the present invention is not achieved" (paragraph [0011]). This is presumed to be because in the case that an organic salt has been contained in large amount exceeding 1 wt%, the organic salt compounded in large amount immediately melts in a resin flow passage, viscosity is excessively decreased, and purging performance is decreased.

Even with the above technology, in the case of the place under severe environment of narrow flow passage and high temperature in a melt molding machine, like a die portion of the melt molding machine has been noted, further improvement in cleaning effect has been required.

### Related Art

### Patent Document

Patent Document 1: JP-A-5-279518

Further state of the art documents relate to resin compositions for cleansing. As such, the JP 2005/220209 A relates to a resin composition for cleansing comprising (A) 100 pts. mass of a base resin (B) 0.1 to 20 pts. mass of an anionic surfactant containing ≤ 50 mass% of an alkanesulfonic acid or its salt and (C) 0.1 to 10 pts. mass of an alkylene glycol fatty acid ester.

Further, the US 5,238,608 A discloses a cleaning composition for a resin molding machine comprising 50 to 95% by weight of a polyolefin resin having a melt index of 0.01 to 0.5, 0.1 to 15% by weight of an acrylic copolymer, 2 to 30% by weight of a neutral salt of an organic sulfonic acid and 0.1 to 10% per weight of basic magnesium carbonate.

The US 4,838,948 A discloses a purging agent containing a polymeric composition as a base resin, an inorganic abrasive and a sulfonated surfactant.

The EP 1 075 370 A1 discloses a cleaning composition and methods for cleaning a first polymer composition from polymer processing apparatus. The cleaning composition generally comprises a second polymer composition and at least one metal salt composition wherein the respective metal is selected from alkaline earth and transition metals.

The JP 10 000672 A discloses a purging agent which characterized by satisfying a specific melting viscosity, when a resin composition containing 1 to 50 weight% of an EVOH resin is molded with a melt extrusion apparatus and then the resin composition retained in the extrusion apparatus is purged using a purging agent containing a polyolefin polymer and a salt of a Group II metal.

### Disclosure of Invention

### Problems to Be Solved by the Invention

Accordingly, the present invention has an object to provide a purging agent that can give excellent cleaning effect even under severe environment of narrow flow passage and high temperature like a die portion and the like of a melt molding machine, and a purging method using the same, in order to solve the above problems.

### Means for Solving the Problems

As a result of earnest investigations in view of the above actual situation, the present inventors have noted that a hydrocarbon resin composition containing large amount of at least one of the metal salts of Group 1 and Group 2 metals in the short form periodic table is used as a purging agent.

The present inventors have found that by this, the metal salt contained in the purging agent migrates to a resin to be purged, the metal salt degrades the resin to be purged, and as a result, excellent cleaning effect is obtained even in the place under severe environment of narrow flow passage and high temperature like a die portion of the melt molding machine, and have completed the present invention.

Furthermore, in the present invention, by concurrently using an organic salt and an inorganic salt, a metal salt can be easily compounded in large amount, and high effect described hereinafter is obtained.

The subject matter of the present invention resides in a purging agent comprising a hydrocarbon resin and at least one of the metal salts of Groups 1 and 2 metals in the short form periodic table, wherein the content of the metal salt based on the hydrocarbon resin is greater than 1 wt% in terms of the metal.

The present invention includes the following embodiments.
[1] A purging agent comprising a hydrocarbon resin and at least one of the metal salts of Groups 1 and 2 metals in the short form periodic table, wherein the metal salt comprises an inorganic salt and an organic salt, the ratio between the inorganic salt and the organic salt is inorganic salt/organic salt = 0.05 to 10 in weight ratio, the organic salt is a carboxylate having from 10 to 25 carbon atoms and the inorganic salt is a carbonate the content of the metal salt based on the hydrocarbon resin is greater than 1 wt% in terms of the metal, and wherein the resin to be purged is an EVOH resin having a melting point of from 150 to 230°C.
[2] The purging agent described in [1], wherein the content of the metal salts of Groups 1 and 2 metals in the short form periodic table is more than 1 wt% and less than 20 wt%, in terms of the metal.
[3] The purging agent described in [1] or [2], having a melt flow rate at 230°C under a load of 2,160 g of from 0.2 to 20 g/10 min.
[4] The purging agent described in any one of [1] to [3], having a pellet shape.
[5] A purging method of a resin to be purged present in a melt molding machine, comprising using the purging agent described in any one of [1] to [4].
[6] A purging method of a resin to be purged present in a melt molding machine, comprising filling a melt molding machine with the purging agent described in any one of [1] to [4], stopping a screw in the state that the inside of the melt molding machine has been filled with the purging agent, allowing the purging agent to stand for from 5 minutes to 5 hours, and discharging the purging agent.
[7] The purging method described in [5] or [6], wherein a barrel temperature of the melt molding machine during filling the machine with the purging agent is from 200 to 260°C.

### Effects of the Invention

In the present invention, by using a hydrocarbon resin composition containing at least one of the metal salts of Group 1 and Group 2 metals in the short form periodic table in an amount larger than the conventional amount as a purging agent, cleaning and removal effects of a resin to be purged in a melt molding machine are excellent and excellent cleaning effect is exhibited even under severe environment of narrow flow passage and high temperature like a die portion of a melt molding machine.

### Embodiments for Carrying Out the Invention

The constitution of the present invention is described in detail below. However, the description is to show one of the desirable embodiments.

The purging agent of the present invention is used to clean and remove a thermoplastic resin remained in a resin flow passage in melt-molding the thermoplastic resin (resin to be purged) using a melt molding machine such as an extruder.

In the present invention, a barrel temperature of an extruder means a surface temperature of a barrel of an extruder. In the case that the barrel of an extruder has a plurality of sections and individual sections are set to different temperatures, a maximum temperature of those temperatures is used as a barrel temperature.

### <Purging agent>

The purging agent of the present invention is a composition comprising a hydrocarbon resin as a base, and at least one of the metal salts of Group 1 and Group 2 metals in the short form periodic table in a large amount.

The content of the hydrocarbon resin based on the purging agent composition of the present invention is generally 80 wt% or more, and preferably 85 wt% or more.

The hydrocarbon resin constituting the base of the purging agent of the present invention is a polymer having a molecular weight of generally 10,000 or more, comprising generally 80 mol% or more of hydrocarbon monomer as a main monomer, wherein the main chain is constituted of only carbon bonds.

The hydrocarbon resin has low polarity of a resin, and therefore has a property of being difficult to attach to a metal constituting a melt molding machine.

The content of a copolymerizable monomer other than the hydrocarbon monomer is preferably less than 20 mol% from the standpoint of discharge property of the purging agent.

Examples of the hydrocarbon resin include a polyolefin resin mainly comprising an aliphatic hydrocarbon monomer, and a polystyrene resin mainly comprising an aromatic hydrocarbon monomer.

The polyolefin resin mainly comprising an aliphatic hydrocarbon monomer is described below. The aliphatic hydrocarbon monomer specifically includes ethylene, propylene butene and the like.

The polyolefin resin means a homopolymer comprising each of those aliphatic hydrocarbon monomers, and a random copolymer and a block copolymer, of two kinds or more of olefin monomers

Examples of the polyolefin resin include polyethylene resins such as ultralow density polyethylene, (linear) low density polyethylene, high density polyethylene, and an ethylene-α-olefin copolymer such as an ethylene-propylene copolymer, an ethylene-octene copolymer or an ethylene-hexene copolymer; polypropylene resins such as polypropylene, and a propylene-α-olefin copolymer such as a propylene-ethylene copolymer or a propylene-butene copolymer; polybutene, and polymethylpentene.

The polystyrene resin mainly comprising an aromatic hydrocarbon monomer is described below. The aromatic hydrocarbon monomer specifically includes styrene methylstyrene and the like. Examples of the polystyrene resin include a homopolymer comprising each of those aromatic hydrocarbon monomers, and a random copolymer and a block copolymer, of two kinds or more of monomers.

From the standpoints of discharge property and economic efficiency of the purging agent, the hydrocarbon resin is preferably a polyethylene resin or a polypropylene resin, particularly preferably a polyethylene resin, especially preferably low density polyethylene, and further linear low density polyethylene.

The density of the hydrocarbon resin is a value measured according to the definition of JIS K7112 (1999), and is generally from 0.85 to 0.98 g/cm³, further from 0.90 to 0.95 g/cm³, preferably from 0.91 to 0.94 g/cm³, and more preferably 0.92 to 0.93 g/cm³. When the value falls within the above range, the purging effect tends to be obtained more remarkably.

The melt flow rate (MFR) of the hydrocarbon resin is generally from 0.1 to 50 g/10 min, preferably from 0.2 to 10 g/10 min, and more preferably from 0.5 to 5 g/10 min, under the conditions of 190°C and a load of 2,160 g. When the value falls within the above range, the purging effect tends to be obtained more remarkably.

The number average molecular weight of the hydrocarbon resin is a value measured on the basis of polystyrene by GPC (gel permeation chromatograph), and is generally from 1×10⁴ to 5×10⁴, preferably from 2×10⁴ to 4×10⁴, more preferably from 3×10⁴ to 3.8×10⁴, and particularly preferably from 3×10⁴ to 3.5×10⁴. When the value falls with in the above range, the purging effect tends to be obtained more remarkably.

The degree of dispersion of a molecular weight of the hydrocarbon resin (weight average molecular weight/number average molecular weight) is generally from 3 to 6, preferably from 3.2 to 5, and particularly preferably from 3.5 to 4.5. When the value falls within the above range, the purging effect tends to be obtained more remarkably.

### <Metal salt>

The purging agent of the present invention is a composition comprising a hydrocarbon resin as a base, and at least one of the metal salts of Group 1 and Group 2 metals in the short form periodic table in an amount larger than the conventional amount.

Therefore, the content of the metal salt based on the hydrocarbon resin of the purging agent of the present invention is more than 1 wt%, preferably from more than 1 wt% to less than 20 wt%, particularly preferably from 1.2 to 10 wt%, and especially preferably from 1.5 to 3 wt%, in terms of the metal. Where the content is too large, productivity and economic efficiency tend to be decreased. Where the content is too small, cleaning effect tends to become insufficient.

The Group 1 and Group 2 metals in the short form periodic table in at least one of the metal salts of the Group 1 and Group 2 metals in the short form periodic table have a function of degrading the resin to be purged. The metals specifically include lithium, sodium, potassium, copper, rubidium, silver, cesium, gold, francium, beryllium, magnesium, calcium, zinc, strontium, cadmium, barium, mercury and radium.

Of those, from the standpoints of easy availability, economic efficiency and purging performance, the Group 2 metals are preferred, and magnesium, zinc and calcium are particularly preferred.

The metal salts of Group 1 and Group 2 metals in the short form periodic table include an organic salt and an inorganic salt. The salts are preferably low molecular compounds from the standpoint of dispersibility in the resin composition.

The organic salt means carboxylate, and examples thereof include acetate, oxalate, laurate, mirystate, palmitate, stearate, alginate, heptadecylate, behenate, oleate, elaidate, erucate, linoleate, linolenate, recinoleate, hydroxystearate, montanate, isostearate epoxystearate and the like.

Above all, long-chain aliphatic carboxylate having relatively large carbon atoms is preferred from the standpoint of having surface activity property. Carboxylate having from 10 to 25 carbon atoms is preferred, carboxylate having from 12 to 22 carbon atoms is more preferred, and carboxylate having from 14 to 20 carbon atoms is particularly preferred. Where the number of carbon atoms is too large, such carboxylate tends to lack versatility. Where the number of carbon atoms is too small, purging performance tends to become insufficient due to deficiency of surface activity during melting.

That is, the organic salt is preferably the metal salts of Group 2 metals of carboxylic acid having from 14 to 20 carbon atoms, and most preferably magnesium salt of carboxylic acid having from 14 to 20 carbon atoms.

The melting point of the organic salt is generally from 100 to 220°C, preferably from 110 to 180°C, and particularly preferably from 120 to 160°C. The melting point is preferred in that surface activity property is exhibited when the organic salt is melted in a flow passage.

The inorganic salt means a salt having an anion derived from an inorganic compound, and examples thereof include borate, phosphate, carbonate sulfate and the like . Above all, from the stand point that the effect of decomposing an EVOH resin is high and cleaning effect is high, a basic inorganic salt is preferred, and carbonate is particularly preferred.

Above all, magnesium carbonate is stable in the state of basic magnesium carbonate and is commercially available in this state. Therefore, the magnesium carbonate is preferred.

The inorganic salt does not melt in a resin flow passage. Therefore, it is considered that the inorganic salt has the effect of physically scraping off the resin to be purged, caked in a resin flow passage.

The particle size of the metal salt used to prepare the purging agent of the present invention is better to be small from the standpoint of moldability and for suppressing retention in an apparatus. Preferably, the average particle size of the metal salt is generally 20 microns or less in a particle size distribution measurement by a laser diffraction scattering method.

The metal salt used to prepare the purging agent of the present invention is preferably that the above-described organic salt and inorganic salt are used together. In particular, inorganic salt/organic salt weight ratio is generally from 0.05 to 10, preferably from 0.1 to 8, particularly preferably from 0.2 to 5, and especially preferably from 1 to 1.5.

Metal species of the inorganic salt and the organic salt may be the same or different. The metal species are preferably the same from the standpoint of discharge property of the purging agent.

It is preferred to use carbonate as the inorganic salt and to use long-chain aliphatic carboxylate as the organic salt from the standpoints of economic efficiency and productivity of raw materials, and cleaning effect.

Most preferably, magnesium carbonate is used as the inorganic slat, and magnesium carboxylate having from 14 to 20 carbon atoms is used as the organic salt.

When the inorganic salt and the organic salt are concurrently used as the metal salt, the cleaning effect by degradation of the resin to be purged, by the metal salt is increased. Furthermore, the inorganic salt generally has a melting point of 500°C or higher, and this temperature is far higher than a melt molding temperature of a general thermoplastic resin. Therefore, it is considered that the inorganic salt does not melt in a resin flow passage, and plays the role of frictionally scraping off the resin to be purged, remained on a wall of a resin flow passage. The organic salt such as a high fatty acid salt is one kind of surfactants. Therefore, it is presumed that the organic salt has the effect of separating the resin to be purged, adhered to the inside of a resin flow passage from a metal surface, and peeling the same.

The MFR of the purging agent of the present invention is generally from 0.2 to 20 g/10 min, preferably from 0.5 to 15 g/10 min, and particularly preferably from 1 to 10 g/10 min, at a temperature of 230°C under a load of 2,160 g. Where the value is too large, the purging effect tends to be not sufficiently exhibited.

### <Production method of purging agent>

The purging agent of the present invention is prepared by compounding the metal salt described above and a hydrocarbon resin constituting a base.

The compounding can use the conventional methods. Among the conventional methods, use of an extruder is preferred from the standpoint of processability and economic efficiency. The kind of the extruder is not particularly limited, and general extruders such as a single-screw extruder, a twin-screw extruder and a multi-screw extruder can be used.

The barrel temperature of the extruder in compounding by the extruder is generally from 150 to 300°C, preferably from 160 to 280°C, and particularly preferably from 170 to 250°C.

The metal salt in the purging agent is preferably uniformly dispersed in the hydrocarbon resin constituting a base.

As necessary, the purging agent of the present invention may contain a thermal stabilizer such as hindered phenol or hindered amines, a silicon or fluorine fatty acid ester, an amide lubricant, a foaming agent, or a filler (metal oxide, hydroxide or the like), in an amount of generally less than 3 wt%, and preferably less than 1 wt%, based on the sum of the purging agent.

The purging agent of the present invention is preferably formed into a pellet after compounding as described above. A method for forming a pellet can use the conventional methods. The pellet generally has a spherical shape, a columnar shape, a cubic shape, a rectangular shape, or the like. A columnar pellet is preferred, and its diameter is generally from 1 to 5 mm, and its length is generally 1 to 5 mm.

### <Resin to be purged>

The thermoplastic resin to which the purging agent of the present invention is applied (that is, the resin to be purged) includes the known thermoplastic resins. The thermoplastic resin is a thermoplastic resin having a melting point (or flow beginning temperature in the case of an amorphous resin) of generally from 100 to 270°C, preferably from 120 to 250°C, and particularly preferably from 150 to 230°C. Specific examples of the thermoplastic resin include a vinyl alcohol resin such as an EVOH resin or a PVA resin, a PA resin, a polyolefin resin (linear low density polyethylene, low density polyolefin, medium density polyethylene, high density polyethylene, an ethylene-vinyl acetate copolymer, an ionomer, an ethylene-propylene copolymer, an ethylene-acrylic acid ester copolymer, polypropylene, a propylene-α-olefin (α-olefin having from 4 to 20 carbon atoms) copolymer, polybutene, polypentene or the like), a modified polyolefin resin obtained by graft-modifying a polyolefin resin with unsaturated carboxylic acid, a polyester resin, a polyvinyl chloride resin, a thermoplastic polyurethane resin, polyvinylidene chloride, an acrylic resin, a polystyrene resin, a vinyl ester resin, a polyester elastomer, a polyurethane elastomer, chlorinated polyethylene, chlorinated polypropylene, aromatic or aliphatic polyketone and the like. Those may be used alone or as mixtures of two or more thereof.

The purging agent of the present invention is particularly effective to a highly polar thermoplastic resin having properties of easily attaching to a metal of a melt molding machine and being difficult to remove. Specifically, the purging agent is effective to a vinyl alcohol resin such as an EVOH resin or a PVA resin, and a PA resin.

The vinyl alcohol resin such as an EVOH or a PVA resin, and PA resin, that are a polar group-containing thermoplastic resin, are frequently used as an intermediate layer of a packing material of foods and the like in view of its gas barrier performance. Since the polar group-containing thermoplastic resin tends to decrease gas barrier property by moisture, the polar group-containing thermoplastic resin is used in a packing material or the like as a multilayered structure having a hydrophobic thermoplastic resin (for example, a polyolefin resin, a polystyrene resin a polyester resin or the like) as a surface layer, and in some cases, having an adhesive resin (for example, an unsaturated carboxylic acid-modified polyolefin resin or the like) between each of layers.

In the case of producing the above multilayered structure, it is frequently the case that scraps formed in the production step are recovered, and the recovered product is again melt-molded with an extruder and recycled as at least one layer of a fresh multilayered structure.

The recycling operation is that a resin composition containing a polar group-containing thermoplastic resin, a hydrophobic thermoplastic resin and an adhesive resin, that constitute a multilayered structure is melt-mixed with an extruder, and then molded. The purging agent of the present invention is effective even in the case that the resin composition containing the resins having high polarity are purged, that is, cleaned and removed from the extruder.

Thus, in the case that the resin to be purged is a resin composition, the content of the vinyl alcohol resin such as an EVOH resin or a PVA resin, and the polar group-containing thermoplastic resin such as a PA resin is generally allowed to be from 1 to 99 wt% based on the resin to be purged.

Particularly, since the purging agent of the present invention contains relatively large amount of the metal salt, in the case that the purging agent is applied to the vinyl alcohol resin such as an EVOH resin or a PVA resin, the metal salt migrates into the vinyl alcohol resin polymer and the effect of degrading the resin is high. Therefore, the purging agent is particularly effective to clean the vinyl alcohol resin attached to a narrow and high temperature portion like a die portion of a melt molding machine.

The resin most preferred as the resin to be purged is an EVOH resin.

The resin to be purged in the present invention may contain conventional lubricant, metal oxide (for example, silicon oxide, titanium oxide or the like used as a pigment), antioxidant, desiccant, filler and oxygen absorber.

### <Target melt molding machine>

The melt molding machine used in melt-molding the resin to be purged is not particularly limited, and general extruders can be used. For example, a single-screw extruder, a twin-screw extruder, a multi-screw extruder and the like are exemplified, and any extruder can be used. In detail, a single layer cast extruder, a single layer inflation extruder, a single layer blow extruder, an injection molding machine, a multilayer cast extruder, a multilayer inflation extruder, a multilayer blow extruder, a co-injection molding machine and the like are used.

### <Purging method>

The purging agent of the present invention contains relatively large amount of at least one of the metal salts of Group 1 and Group 2 metals in the short form periodic table. Therefore, the metal salt in the purging agent migrates into the resin to be purged, and the metal salt degrades the resin to be purged. As a result, the purging agent exhibits excellent purging performance even in a die portion or the like of a melt molding machine, that is under severe environment of a narrow flow passage and high temperature, and has excellent cleaning effect.

The purging method using the purging agent of the present invention can employ the conventional methods. Specifically, after melt-molding a thermoplastic resin by a melt molding machine, the purging agent of the present invention is simply supplied to fill the inside of the melt molding machine, and then discharged.

The temperature of the melt molding machine during melt-molding the thermoplastic resin (the resin to be purged) (for example, when an extruder is used, barrel temperature of the extruder) is generally from 150 to 260°C.

The temperature of the melt molding machine when the purging agent of the present invention fills the inside of the melt molding machine (when an extruder is used, barrel temperature of the extruder) is generally from 180 to 280°C, preferably from 200 to 260°C, more preferably from 210 to 260°C, and particularly preferably from 230 to 260°C. Where the temperature is too high, the viscosity of the purging agent is decreased, and property of cleaning the resin to be purged tends to be decreased. Where the temperature is too low, discharge property of the purging agent itself tends to be decreased.

The temperature of the melt molding machine when melt-molding the thermoplastic resin or when filling with the purging agent means, for example, when an extruder is used, the barrel temperature of the extruder, that is, the surface temperature of a barrel of the extruder. In the case that the barrel of an extruder has a plurality of sections and individual sections are set to different temperatures, a maximum temperature of those temperatures is used as the barrel temperature.

The amount of the purging agent used of the present invention is generally determined by a size of a melt molding machine and an extent of contamination of the resin to be purged. From the standpoints of handling property and economic efficiency, the amount is generally from 5 to 100 times, preferably from 8 to 50 times, and particularly preferably 10 to 30 times, the resin volume of a melt molding machine (volume in which a resin is filled, obtained by excluding a screw volume from a barrel volume).

It is preferred in the purging method of the present invention that to facilitate migration of the metal salt in the purging agent into the resin to be purged, the purging agent is supplied to a melt molding machine such as an extruder to fill the melt molding machine with the purging agent, a screw is stopped in the state that the inside of the melt molding machine is filled with the purging agent, and the purging agent is allowed to stand for a certain period of time. The period of time that the purging agent is allowed to stand is generally from 5 minutes to 5 hours, more preferably from 0.2 to 3 hours, and particularly preferably from 0.5 to 2 hours. Where the period of time is too long, the cleaning effect tends to be decreased by the decrease in productivity or the deterioration of the purging agent itself. Where the period of time is too short, the purging effect tends to be decreased.

In the case that steps of retaining the purging agent in the melt molding machine and further supplying the purging agent such that after filling the inside of an extruder with the purging agent, a screw is stopped, the purging agent is allowed to stand for a certain period of time, and the purging agent is again charged in the melt molding machine and is then allowed to stand, are repeated, the sum of the retention time of the purging agent in the melt molding machine preferably falls within the above range.

In the case of using an extruder, the number of revolutions of a screw of the extruder during purging is the same as the number of revolutions when molding the resin to be purged from the standpoint of convenience. From the standpoint of practical use, the number of revolutions is generally from 5 to 300 rpm, preferably from 10 to 250 rpm, and particularly preferably from 10 to 100 rpm. It is expected that the extrusion effect of the resin to be purged is improved by periodically increasing and decreasing the number of revolutions of the screw during purging.

As described above, the purging agent of the present invention and the purging method using the same are that because the purging agent contains a metal salt in an amount larger than the conventional amount, the metal salt in the purging agent migrates into the resin to be purged, and the metal salt degrades the resin to be purged, thereby the excellent effect that excellent cleaning effect is obtained even in a die portion and the like of a melt molding machine, that are under severe environment of narrow flow passage and high temperature, is exhibited.

### Examples

Unless otherwise indicated, the term "parts" used in the Examples are weight basis.

### Example 1

90 parts of linear low density polyethylene (NOVATEC LL UF 230, manufactured by Japan Polyethylene Corporation, MFR: 1.0 g/10 min (190°C, 2,160 g load), density: 0.921 g/cm³, number average molecular weight (polystyrene basis): 3.2×10⁴, degree of dispersion (Mw/Mn): 3.9) were used as a purging agent, 5 parts of magnesium stearate (manufactured by NOF Corporation, melting point: 125°C) and 5 parts of basic magnesium carbonate (manufactured by Konoshima Chemical Co., Ltd., GOLD STAR) were used as a metal salt, and those were dry-blended. The content of the metal salt in the resulting purging agent is 10 wt%, and the content of the metal salt based on a hydrocarbon resin is 1.5 wt% in terms of the metal.

The dry-blended product was melt-kneaded using a twin-screw extruder under the following conditions and formed into pellets.
Screw diameter: 30 mm
Temperature of extruder: C1/C2/C3/C4/C5/C6/C7/H/D=80/100/210/220/220/220/ 230/220/220°C
Discharge rate: 10 kg/h
Number of revolutions: 150 rpm

The MFR of the pellets obtained was 2.4 g/10 mm under the conditions of 230°C and 2,160 g load.

### <Reproduction model experiment of thermal degradation state of resin to be purged>

The single-screw extruder described below was used, and the extruder and a die temperature were set as follows. A saponified ethylene-vinyl acetate copolymer (ethylene content: 29 mol%, degree of saponification: 99.8 mol%, MFR: 3.4 g/10 min (210°C, load 2,160 g)) was discharged for 30 minutes while supplying, followed by being allowed to stand for 2 hours while heating, and the state after long-term production of EVOH resin molding was reproduced.
Screw type: Full flight
Screw diameter: 40 mm
L/D: 28
Screw compression ratio: 2.5
Die: Coat hanger die
Extruder temperature: C1/C2/C3/C4/H/D=220/250/260/260/260/240°C
Number of revolutions: 40 rpm

### <Purging operation>

While maintaining the above extruder temperature, the purging agent was supplied for 20 minutes. After the inside of the extruder was filled with the purging agent, the screw was stopped, and the purging agent was allowed to stand for 10 minutes. Thereafter, the number of revolutions of the screw was set to 10 rpm, and the purging agent was supplied for 10 minutes. Step of retention of the purging agent in the extruder and further supply of the purging agent was repeated three times.

Thereafter, the EVOH resin was again supplied to the extruder to initiate film formation. After conducting the film formation for 2 hours, the purging agent in the extruder was substituted with a small amount of polyethylene, the extruder was disassembled, and contamination state of the die was observed.

### [Purging effect]

⊚: Deposit of a resin to be purged was not present at all on a die.
○: Deposit is slightly present in a thin film shape on a die, but viscosity of the deposit is sufficiently decreased, and cleaning is easy.
Δ: Resin layer having slightly large thickness is attached to a die, and long cleaning time is required as compared with the state of ○.
×: Resin layer having large thickness is attached to a die, viscosity of the deposit is not sufficiently decreased, and therefore, longer cleaning time is required as compared with the state of Δ.

### Example 2

Experiment was conducted in the same manner as in Example 1, except for using NIPOLON L F21, manufactured by Tosoh Corporation (MFR: 1.1 g/10 min (190°C, load 2,160 g), density: 0.92 g/cm³, number average molecular weight (polystyrene basis): 2.0×10⁴, degree of dispersion (Mw/Mn): 5.7) as the linear low density polyethylene, and the same evaluation as in Example 1 was made

### Comparative Example 1

A purging agent was obtained in the same manner as in Example 1, except for using 93.4 parts of the linear low density polyethylene as the purging agent, 3.3 parts of magnesium stearate and 3.3 parts of basic magnesium carbonate. Using the purging agent thus obtained, the same operation as in Example 1 was conducted, and the same evaluation as in Example 1 was made. The content of the metal salt in the purging agent obtained is 6.6 wt%, and the content of the metal salt based on the hydrocarbon resin is 1.0 wt% in terms of the metal.

The results of Examples 1 and 2 and Comparative Example 1 are shown in Table 1.

**Table 1**

| | Purging resin | | Purging effect |
|---|---|---|---|
| | Resin | Metal salt (Content based on hydrocarbon resin: in terms of the metal) | |
| Example 1 | Linear low density polyethylene (NOVATEC LL UF230) | Magnesium stearate Basic magnesium carbonate (Magnesium: 1.5 wt%) | ○ (Resin attached to die was mostly removed)* |
| Example 2 | Linear low density polyethylene (NIPOLON LF21) | Magnesium stearate Basic magnesium carbonate (Magnesium: 1.5 wt%) | Δ (Resin layer having relatively large thickness was attached to entire surface of die)* |
| Comparative Example 1 | Linear low density polyethylene (NOVATEC LL UF230) | Magnesium stearate Basic magnesium carbonate (Magnesium: 1.0 wt%) | × (Resin layer having large thickness was attached to entire surface of die)* |

| | | | |
|---|---|---|---|
| *Resin attached to screw was mostly removed. | | | |

It is seen from the above results that in Examples 1 and 2 using the purging agent of the present invention containing at least one of the metal salts of Group 1 and Group 2 metals in the short form periodic table in an amount larger than the amount conventionally used, excellent cleaning effect is obtained in a die portion and the like of an extruder that are under severe environment of narrow flow passage and high temperature, as compared with the conventional purging agent (Comparative Example 1).

### Example 3

The purging agent obtained in Example 1 was used, and the following evaluations were made.

### <Reproduction model experiment of thermal degradation state of resin to be purged (recycle resin composition of multilayer structure)>

The following resin composition was prepared as a model composition of a recycle resin composition of multilayer structure.

Using a single-screw extruder under the same conditions as in Example 1, the following resin composition was discharged for 30 minutes while supplying, and was allowed to stand for 2 hours while heating, and the state after long-term production of the resin composition was reproduced.

### <Resin composition>

Polypropylene (NOVATEC PP FX4G, manufactured 85 parts by Nippon Polypropylene Corporation)
Adhesive resin (MODIC-AP P604V, manufactured 5 parts by Mitsubishi Chemical Corporation)
Saponified ethylene-vinyl acetate copolymer 10 parts
   (ethylene content: 29 mol%, degree of saponification:
   99.8 mol%, MFR: 3.4 g/10 min (210°C, 2160 g load)

### <Purging operation>

Thereafter, the purging agent was supplied for 20 minutes while maintaining the above extruder temperature. After the inside of the extruder was filled with the purging agent, the screw was stopped, and the purging agent was allowed to stand for 60 minutes.

Thereafter, only the polypropylene was supplied to the extruder, and film formation was initiated. After conducting the film formation for 2 hours, the polypropylene in the extruder was replaced with a small amount of polyethylene, the extruder was disassembled, and contamination state of the die was observed and evaluated in the same manner as in Example 1.

The results of Example 3 are shown in Table 2.

**Table 2**

| | Purging resin | | Purging effect |
|---|---|---|---|
| | Resin | Metal salt (Content based on hydrocarbon resin: in terms of the metal) | |
| Example 3 | Linear low density polyethylene (NOVATEC LL UF230) | Magnesium stearate Basic magnesium carbonate (Magnesium: 1.5 wt%) | ⊚ (Resin was not attached to die at all)* |

| | | | |
|---|---|---|---|
| *Resin attached to screw was mostly removed. | | | |

It is seen from the above results that the purging agent of the present invention can obtain excellent effect even in the case that a recycle resin composition of a multilayer structure, containing a thermoplastic resin having high polarity such as an EVOH resin is used as the resin to be purged.

### Industrial Applicability

The purging agent and the purging method, of the present invention can obtain excellent cleaning effect even in die portion and the like of an extruder under severe environment of narrow flow passage and high temperature by using a composition containing at least one of the metal salts of Group 1 and Group 2 metals in the short form periodic table in an amount larger than the amount conventionally used, based on a hydrocarbon resin, as a purging agent.

## Claims

1. A purging agent comprising a hydrocarbon resin and metal salts of Groups 1 and 2 metals in the short form periodic table, wherein the metal salts comprise an inorganic salt and an organic salt, the ratio between the inorganic salt and the organic salt is inorganic salt/organic salt = 0.05 to 10 in weight ratio, the organic salt is an aliphatic carboxylate having from 10 to 25 carbon atoms and the inorganic salt is a carbonate the content of the metal salt based on the hydrocarbon resin is greater than 1 wt% in terms of the metal, and wherein the resin to be purged is an EVOH resin having a melting point of from 150 to 230°C.

2. The purging agent according to claim 1, wherein the content of the metal salts of Groups 1 and 2 metals in the short form periodic table is more than 1 wt% and less than 20 wt%, in terms of the metal.

3. The purging agent according to claim 1 or 2, having a melt flow rate at 230°C under a load of 2,160 g of from 0.2 to 20 g/10 min.

4. The purging agent according to any one of claims 1 to 3, having a pellet shape.

5. A purging method of a resin to be purged present in a melt molding machine, comprising using the purging agent according to any one of claims 1 to 4, wherein the resin to be purged is an EVOH resin having a melting point of from 150 to 230°C.

6. A purging method of a resin to be purged present in a melt molding machine, comprising filling a melt molding machine with the purging agent according to any one of claims 1 to 4, stopping a screw in the state that the inside of the melt molding machine has been filled with the purging agent, allowing the purging agent to stand for from 5 minutes to 5 hours, and discharging the purging agent.

7. The purging method according to claim 5 or 6, wherein a barrel temperature of the melt molding machine during filling the machine with the purging agent is from 200 to 260°C.

## Patentansprüche

1. Spülmittel, aufweisend ein Kohlenwasserstoffharz und Metallsalze aus Gruppe-1-und Gruppe-2-Metallen in der Kurzform des Periodensystems, wobei die Metallsalze ein anorganisches Salz und ein organisches Salz aufweisen, wobei das Verhältnis zwischen dem anorganischen Salz und dem organischen Salz anorganisches Salz zu organischem Salz 0,05 zu 10 im Gewichtsverhältnis beträgt, wobei das organische Salz ein aliphatisches Carboxylat mit 10 bis 25 Kohlenstoffatomen ist und das anorganische Salz ein Carbonat ist, der Gehalt des Metallsalzes auf Basis des Kohlenwasserstoffharzes höher ist als 1 Gewichtsprozent in Bezug auf das Metall, und wobei das zu spülende Harz ein EVOH-Harz ist, das einen Schmelzpunkt zwischen 150 und 230 °C hat.

2. Spülmittel nach Anspruch 1, wobei der Gehalt der Metallsalze aus Gruppe-1- und Gruppe-2-Metallen in der Kurzform des Periodensystems mehr als ein Gewichtsprozent und weniger als 20 Gewichtsprozent in Bezug auf das Metall beträgt.

3. Spülmittel nach Anspruch 1 oder 2, mit einer Schmelzströmungsrate bei 230 °C mit einer Last von 2.160 g zwischen 0,2 und 20g /10 Min.

4. Spülmittel nach einem der Ansprüche 1 bis 3, wobei es eine Pelletform aufweist.

5. Spülverfahren eines zu spülenden Harzes, das sich in einer Schmelzformmaschine befindet, aufweisend ein Verwenden des Spülmittels nach einem der Ansprüche 1 bis 4, wobei das zu spülende Harz ein EVOH-Harz mit einem Schmelzpunkt zwischen 150 und 230 °C ist.

6. Spülverfahren eines zu spülenden Harzes, das sich in einer Schmelzformmaschine befindet, aufweisend ein Füllen einer Schmelzformmaschine mit dem Spülmittel nach einem der Ansprüche 1 bis 4, einem Stoppen einer Schraube in dem Zustand, dass das Innere der Schmelzformmaschine mit dem Spülmittel befüllt wurde, ein Ermöglichen, dass das Spülmittel zwischen 5 Minuten und 5 Stunden stehenbleibt, und ein Ausstoßen des Spülmittels.

7. Spülverfahren nach Anspruch 5 oder 6, wobei eine Gehäusetemperatur der Schmelzformmaschine während des Füllens der Maschine mit dem Spülmittel zwischen 200 und 260 °C liegt.

## Revendications

1. Agent de purge comprenant une résine hydrocarbonée et des sels de métaux des groupes 1 et 2 dans la classification périodique de forme courte, dans lequel les sels de métaux comprennent un sel inorganique et un sel organique, le rapport entre le sel inorganique et le sel organique est sel inorganique/sel organique = 0,05 à 10 en rapport de masse, le sel organique est un carboxylate aliphatique ayant de 10 à 25 atomes de carbone et le sel inorganique est un carbonate dont la teneur du sel de métal rapporté à la résine hydrocarbonée est supérieure à 1 % en masse en termes du métal, et dans lequel la résine à purger est une résine EVOH ayant un point de fusion de 150 à 230°C.

2. Agent de purge selon la revendication 1, dans lequel la teneur des sels de métaux des groupes 1 et 2 dans la classification périodique de forme courte est supérieure à 1 % en masse et inférieure à 20 % en masse, en termes du métal.

3. Agent de purge selon la revendication 1 ou 2, présentant un indice de fusion à 230°C sous une charge de 2 160 g de 0,2 à 20 g/10 min.

4. Agent de purge selon l'une quelconque des revendications 1 à 3, ayant une forme de boulette.

5. Procédé de purge d'une résine à purger présente dans une machine de moulage par fusion, comprenant l'utilisation de l'agent de purge selon l'une quelconque des revendications 1 à 4, dans lequel la résine à purger est une résine EVOH ayant un point de fusion de 150 à 230°C.

6. Procédé de purge d'une résine à purger présente dans une machine de moulage par fusion, comprenant le remplissage d'une machine de moulage par fusion avec l'agent de purge selon l'une quelconque des revendications 1 à 4, l'arrêt d'une vis dans l'état où l'intérieur de la machine de moulage par fusion a été rempli avec l'agent de purge, le laisser au repos de l'agent de purge pendant de 5 minutes à 5 heures, et la décharge de l'agent de purge.

7. Procédé de purge selon la revendication 5 ou 6, dans lequel une température de tambour de la machine de moulage par fusion pendant le remplissage de la machine avec l'agent de purge est de 200 à 260°C.
